(19) Europäisches Patentamt
European Patent Office
Office européen des brevets

(11) EP 0 690 965 B1

## (12) EUROPEAN PATENT SPECIFICATION

(45) Date of publication and mention
of the grant of the patent:
**09.12.1998 Bulletin 1998/50**

(21) Application number: **95910359.9**

(22) Date of filing: **19.01.1995**

(51) Int Cl.6: **F16H 3/089**, F16H 3/091,
F16H 3/12, F16H 3/16

(86) International application number:
**PCT/BR95/00002**

(87) International publication number:
**WO 95/20729 (03.08.1995 Gazette 1995/33)**

(54) **TRANSMISSION OF THE DRAW KEY TYPE**

GETRIEBE IN ZIEHKEILBAUWEISE

TRANSMISSION DE TYPE A CLAVETTE SIMPLE COULISSANTE

(84) Designated Contracting States:
**AT BE CH DE DK ES FR GB GR IE IT LI LU MC NL
PT SE**

(30) Priority: **31.01.1994 BR 9400394**

(43) Date of publication of application:
**10.01.1996 Bulletin 1996/02**

(73) Proprietor: **EATON TRUCK COMPONENTS LTDA.**
**13279-400 Valinhos, SP (BR)**

(72) Inventor: **MACHADO, Aryoldo**
**13450-000-Santa Bárbara D'Oeste, SP (BR)**

(74) Representative: **Pendlebury, Anthony et al
PAGE, WHITE & FARRER
54 Doughty Street
London WC1N 2LS (GB)**

(56) References cited:
**EP-A- 0 310 387          EP-A- 0 348 622
WO-A-94/05931          US-A- 1 661 892
US-A- 3 600 962          US-A- 3 793 898
US-A- 4 544 057          US-A- 5 214 974
US-A- 5 404 768**

## Description

The present invention relates to a gear-shifting mechanism controlled and driven by a governing unit in an automatic and controlled way or manually driven by an operator. This mechanism act on constantly meshed gear pairs acting in an exclusive way, that is, only one gear pair will be engaged through this shifting mechanism, out of the set of gear pairs, assembled on two shafts, one for movement input and the other for movement output. A transmission as defined in the preamble of claims 1 and 2 is known from US-A-52 14 974.

Gear pairs shifting mechanisms in a gear box are universally utilized in the form of a hub which is displaced over a splined shaft and transmits by teeth engaging one gear or another. Shifting mechanism can have a rotation synchronizing device to provide for the engagement without teeth rubbing of the teeth. During a ratio change of the meshed pair of gears, which change is made with the machine or vehicle running or moving, a synchronization of the movements of the parts of the transmission box is needed.

These mechanisms have been widely utilized in the mechanical industry and in automotive transmissions. Mechanisms with synchronizing rings are widely used and therefore the technology is fully known. These shifting mechanisms with synchronizing rings are detailed in studies published by SAE(Society of Mechanical Engineers) under number 680008, published on January, 1968.

An embodiment of this invention offers a new conception of shifting mechanism actuating on the clutch between the motor (engine) and the gearbox when the power transmission assembly has a clutch actuating during selecting and engaging a gear pair for the operation. The shifting mechanism actuates by releasing the clutch in order to permit the selection of the gear pair to be made from a set of constantly meshed gear pairs and once made the selection of said gear pair, the shifting mechanism synchronizes the rotation of the rotary members which are active during operation and once synchronization is achieved, the shifting mechanism provides for the engagement of the selected pair for operation. Once this step is attained, the shifting mechanism causes the clutch between the motor (engine) and the gearbox to be closed and thus rotation and torque are now transmitted through the engine (motor) transmission to the output.

According to a first aspect of the invention there is provided a transmission apparatus having a gearbox housing, a multi-ratio draw key gearbox and a gearshifting mechanism, the gearbox having a plurality of constantly meshed gear pairs arranged on an associated shaft, each gear pair defining a respective gear ratio, and the gearshifting mechanism being automatically controlled and monitored by a governing unit which is operable both manually via a shift lever and automatically as may be required,

wherein each of said gear pairs has a first state in which said meshed pair is connected to transmit torque from a gearbox input shaft to a gearbox output shaft, and a second state where said meshed pair idles, **characterised by:**

a set of servo-motors and a set of servo actuators, each motor being controlled by a servo actuator respectively, each servo motor performing a specific function, said set of motors comprising:

an electric select motor operatively connected via a selecting mechanism to said gearbox so as to select a unique meshed gear pair from said plurality of gear pairs, thereby providing a defined gear ratio,

an electric synchronise motor that is operatively connected via a synchronising mechanism to said gearbox for synchronising rotation of a selected meshed gear pair, and

an engaging motor operatively connected via an engagement mechanism to said gearbox so as to set said selected gear pair from said second state in which said gear pair idles to said first state, whereby said selected pair transmits torque.

According to a second aspect of the invention there is provided a method of operating a gearshifting mechanism in a transmission system having a multi-ratio draw key gearbox, and a clutch means, the gearbox having a plurality of constantly meshed gear pairs, each gear pair defining a respective gear ratio, and the clutch means selectively connecting said multi-ratio gearbox to an engine or motor,

wherein each of said gear pairs has a first state in which said meshed pair is connected to transmit torque from a gearbox input shaft to a gearbox output shaft, and a second state in which said meshed pair idles,

the method is characterised by:

-- operating a clutch motor to declutch said clutch means thereby interrupting the power transmission link,

-- operating an engaging motor so as to set said plurality of gear pairs into said second state whereby said gear pairs idle,

-- operating an electric select motor to select a unique meshed gear pair from said plurality of gear pairs,

-- operating an electric synchronise motor for synchronising rotation of said selected meshed gear pair,

-- operating said engaging motor to set said selected gear to said first state, whereby said selected pair transmits torque, and

-- and operating said clutch motor to engage the clutch means to complete the power transmission link.

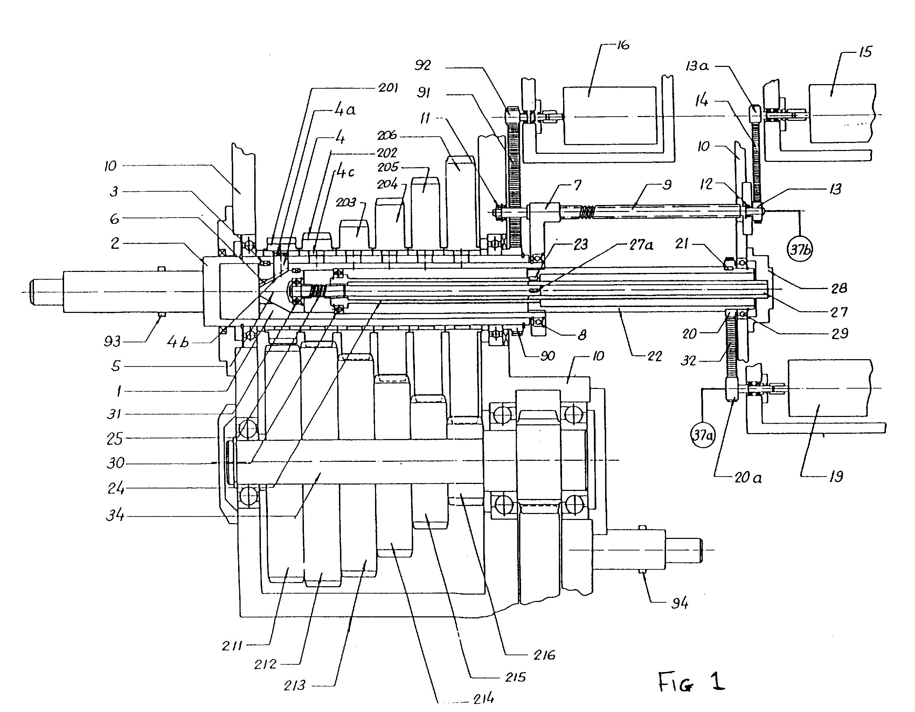

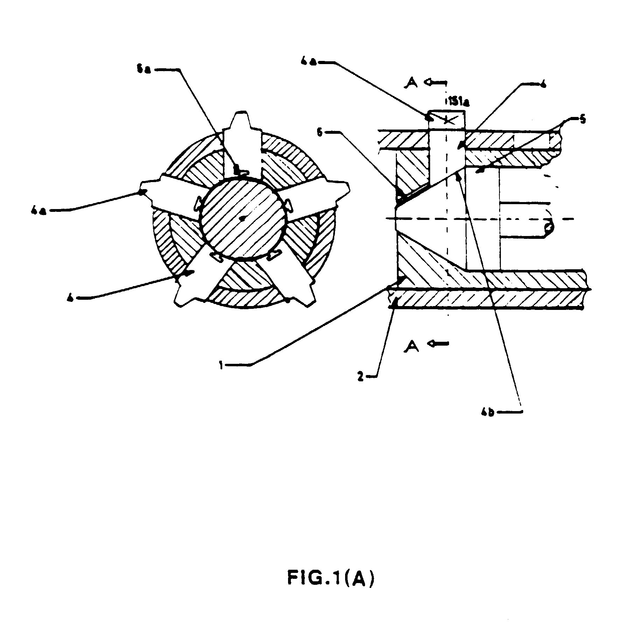

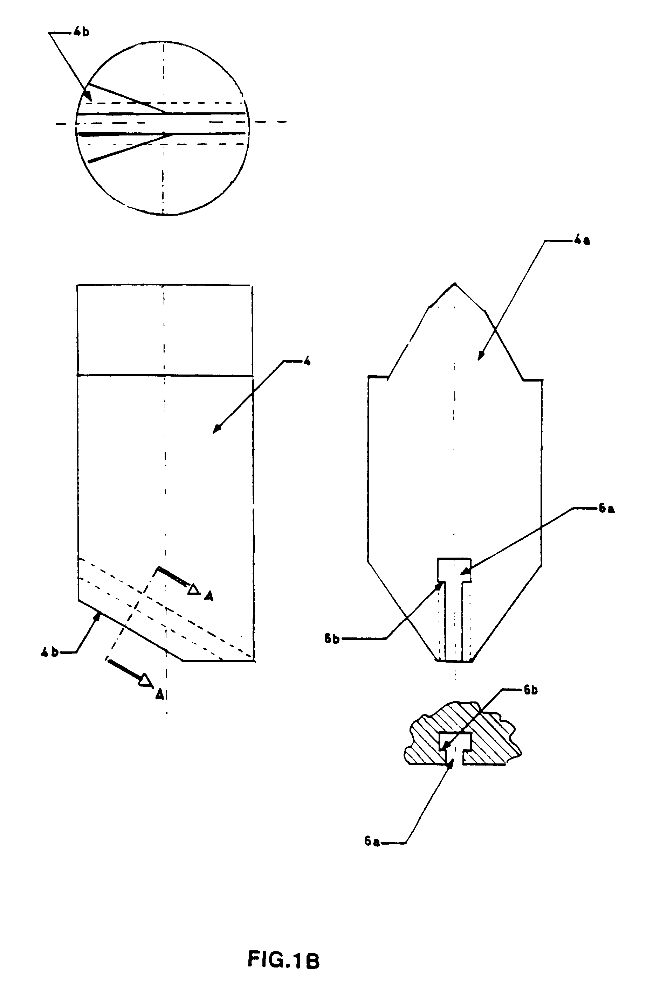

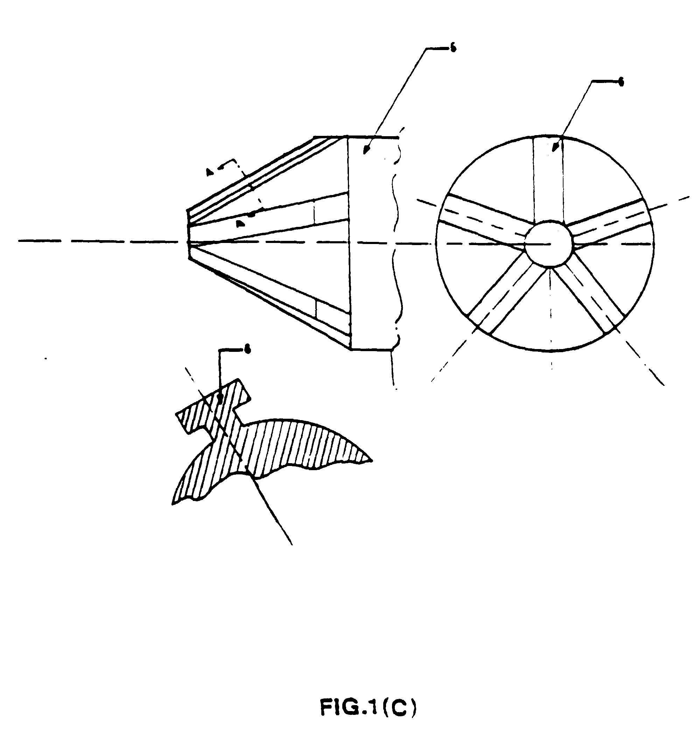

Figure 1 shows a typical application of the gear shifting mechanism with constantly meshed gear pairs actuated mutually exclusively. The gearbox has, as a main portion, the constantly meshed gear pairs. The gears which are disposed on a hollow shaft 2 are mounted so as to slide over this shaft so that they can idle on the hollow shaft 2 on sliding bearings. These are the gears carrying reference numerals 201, 202, 203, 204, 205 and 206. On a shaft 34 parallel to said hollow shaft 2, a set of gear pairs constantly meshed with the above referenced gears is mounted in a fixed way. These gears 211, 212, 213, 214, 215 and 216 are fixed with the parallel shaft 34 and they rotate therewith as if they would be integral therewith. Between the parallel shaft 34 and the hollow shaft 2, a gear shaft parallel to the two can be present in order to enable rotation reversion for a specific gear pair. This solution has been already employed in the gear boxes for vehicles in order to have the reverse speed. Before the hollow shaft 2 as well as after the parallel shaft 34, many shafts as are necessary to the design can be present. The number of constantly meshed gear pairs depends upon the design and the application.

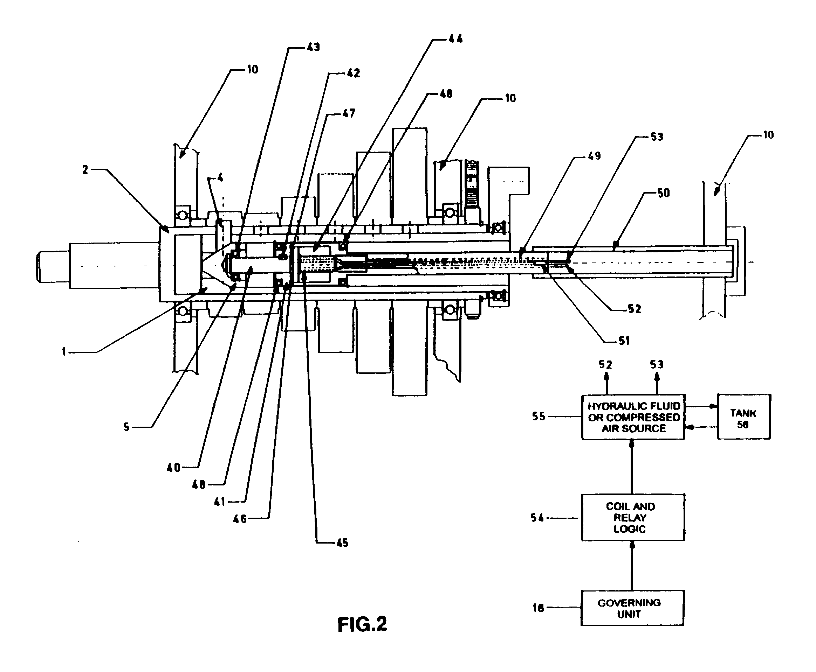

Figure 2 shows a variation of the engagement and disengagement mechanism when actuated by a hydraulic or pneumatic system controlled and governed by the governing unit 18 actuating in conjunction with a relay and coil logic 54 controlling the opening for the inlet of hydraulic fluid or compressed air.

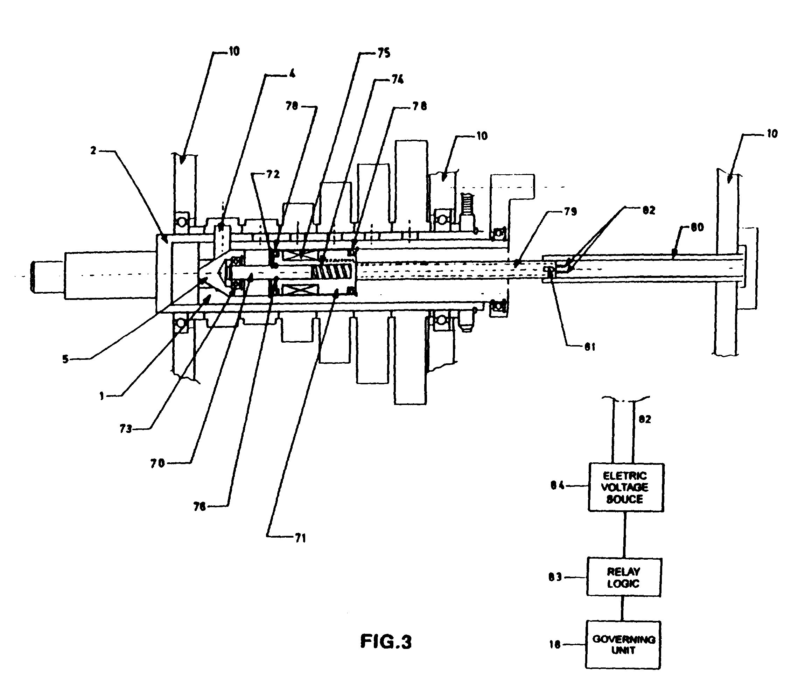

Figure 3 shows a variation of the engagement and disengagement mechanism when actuated by an actuation system having an electromagnetic solenoid controlled and governed by the governing unit 18 which acts logically on a relay set 83 providing the energization or de-energization of a coil 75 through an electrical voltage source 84 for the actuating solenoid 71.

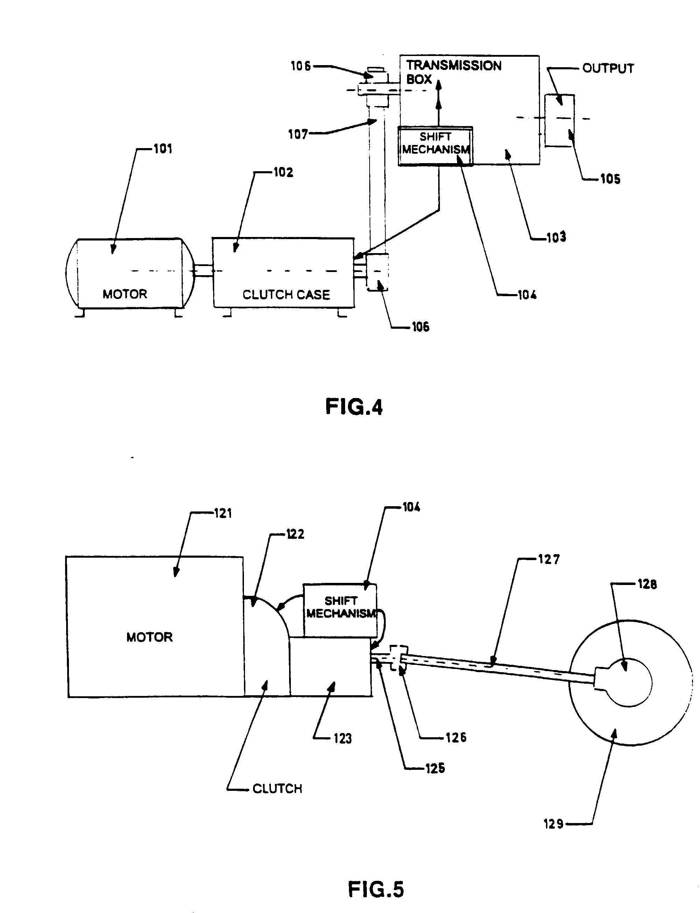

Figure 4 shows the shifting mechanism mounted on a machine with a clutch wherein an electric motor or other type of constant rotation motor 101 providing power to the machine, a clutch 102 between the motor and the gearbox 103 which has constantly meshed gear pairs, a shifting mechanism 104 and a rotation and torque output 105. In order to actuate the clutch, there is an actuation mechanism forming part of the same shifting mechanism 104 which performs also this actuation function of the clutch box 102. Between the clutch 102 and the gear box 103, there is a mechanical linkage element which could be a pair of pulleys 106 coupled by a belt 107, or could be also a rigid or elastic coupling, being well known.

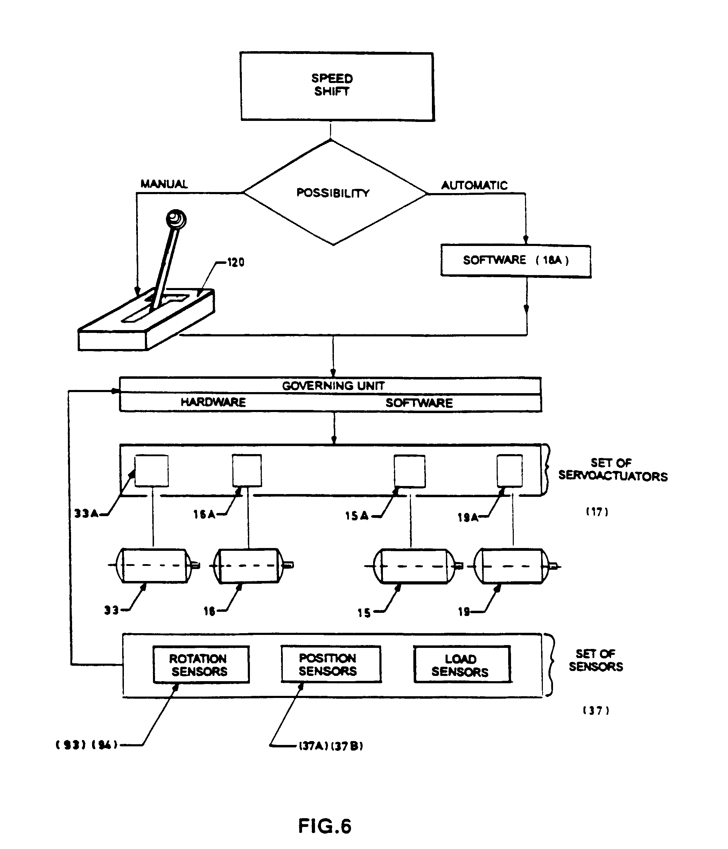

Figure 5 shows the shifting mechanism 104 mounted on a automotive vehicle provided with a clutch, the vehicle having a driving motor which could be a internal combustion engine or some other kind of motor 121 delivering power to the vehicle with variable speed. Between the motor and the gear box there is the clutch 122, then the transmission or gear box with constantly meshed gear pairs 123 and a movement and torque output shaft for a differential 128, via an universal joint 126 and drive shaft 127, and from there to the vehicle wheels 129. The same concept of the object of this invention can be applied to forward drive vehicles. The schematic representation of figure 5 shows a rear drive vehicle. For forward drive vehicle, the whole concept remains the same, changing only the linkage means between output 125 of the transmission box and differential 128.

One feature of this invention is to offer a way of coupling gears so that the shifting mechanism has one of its portions, that is, an engagement and a selection portion mounted internally of a shaft or alternatively mounted in more than one shaft, and this mechanism can be controlled through a governing unit 18 automatically or through the governing unit by the action of an operator or driver. The mechanical portion of the shifting mechanism comprises the parts mounted internally to the shaft, the actuating parts, a chain or belt transmission, and actuating motors. Between the motors and the governing unit 18, there are electro-electronic devices called servo-actuators 17 providing power to the motors as the governing unit 18 sends decoded signals to these servo-actuators so that these cause the motors direct or, direct or alternating current motors alternatively to act in the sequence foreseen by the logic of the governing unit.

Figure 6 shows in a schematic way, the hierarchy of the drives. The governing unit 18 is physically constituted by an electronic hardware based on the microprocessor. The governing unit 18 has also in the memory thereof, a program (software) 18A managing all the events of driving, control, actuating and sensing for the shifting mechanism. The managing hardware and software portions 18A of the governing unit 18 in the case of the application shown in figure 4, can be built-in inside the central processing unit (CPU) of a COMPUTERIZED NUMERICAL CONTROL (CNC) or inside the central processing unit of a PROGRAMMABLE LOGIC CONTROLLER (PLC) adapted for the machine wherein the shifting mechanism is being applied. This governing unit 18 receives pulses to operate, either manually by action of the operator, through the lever 120 or other data input means, or automatically through the managing software 18A itself which is the managing program which has the logic for automatic functioning. This program is stored in the governing unit 18. The immediate connection is to the electronic servoactuator assembly 17 of the actuating motors. Each electronic servo-actuator actuates a motor for the following purposes: a clutch actuating motor 33 actuated by the electro-electronic actuator 33A, aid clutch can alternatively be released and engaged by another sort of system which can be hydraulic or pneumatic, a synchronization actuating motor 16 actuated by the electro-electronic actuator 16A, and an actuation select motor 15 for selection of the gear pair actuated by the servo actuator 19A. Concerning the control system of the clutch for its operation, the actuating mechanism can be other such as hydraulic or pneumatic actuators, piloted and governed by the same governing unit 18 with a logic suitable and proper for the application. An engagement motor 19 as well as the whole engagement mechanism disclosed could alternatively be a hydraulic piston according to figure 2 or a pneumatic piston according to figure 2 or a mechanism composed by an electromagnetic solenoid and a spring 74 according to figure 3. Said motors as well as the servo-actuators thereof 17 can be of electric direct current or electric alternating current. Lastly, the system is completed to a closed loop by a set of sensors 37 for feedback of positioning, rotation and load data.

The mechanical portion of the shift mechanism 104 may have three basic constructions, identical as to the location of the gear pairs, but with three variants of the engagement mechanism of the located and selected gear pairs. The variants are shown through figures 1, 2 and 3 and are now explained :

The first construction of the mechanical portion of the shift mechanism 104 is disclosed in detail in its internal part of selection of the gear pair or selection of speed and engagement of said speed. This first construction utilizes the engagement motor 19 as shown in figure 1.

This first construction comprises a locating tube 1 sliding in the hollow shaft 2 carrying the gears to be engaged. The constantly meshed gear pairs of the transmission box 103, 123 of figures 4 and 5, have one of the gears of the pairs mounted to idle on the hollow shaft 2 and the corresponding gears of the constantly meshed gears mounted on a shaft 34, parallel to the hollow shaft 2 and so engaged with said parallel shaft 34 so as to rotate as if the parallel shaft 34 and said gears were an integral one-piece. This locating tube 1 can have at the end thereof five or more or less radial holes, the number of radial holes radial holes will depend on the mechanical torque transmitted through the transmission box.

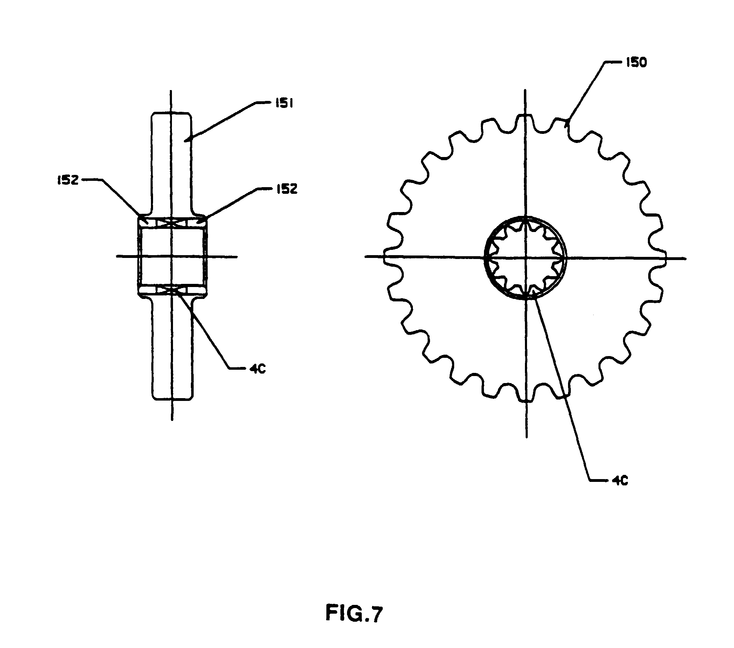

Figure 7 shows said gears which rotate idly on the hollow shaft 2 and form part of the constantly meshed gear pairs of the transmission box 103, 123. These are gears whose external teeth 150 which transmit torque and rotation, are constructed by techniques of cutting and machining teeth already known in the mechanical manufacturing art. Each constantly meshed gear pair has its transmission ratio in conformity with the plurality of the constantly meshed gear pairs. Said gears which rotate idly on the hollow shaft 2 have in an inner hole where the hollow shaft 2 centered by its centerline 151 of the external teeth 150, an internal teeth set 4c. In these teeth, there may be coupled teeth 4a of engagement pins 4. On both sides of internal teeth 4c and in the inner hole of the idler gear, sliding bearings 152 are mounted which allow the gear, when it is not engaged by the engagement pins 4, to rotate idly on the hollow shaft 2 with minimum friction and with minimum energy dissipation and in a balanced way since said sliding bearings 152 are mounted on both sides of the internal teeth 4c. The spacing of internal teeth 4c and the dimensions thereof permit coupling with teeth 4a of the engagement pins 4. Said gears which rotate idly on hollow shaft 2 have as respective pairs the gears which are engaged on the parallel shaft 34 and are constantly meshed therewith. Hollow shaft 2 has a row of radially disposed holes equally spaced and centered exactly in the centerline 151 of each gear mounted idly on the shaft. It is through these holes of the hollow shaft 2 that the engagement pins 4 will transmit torque and rotation of the hollow shaft 2 to the gear of the constantly meshed pair selected for the work. In order to ensure a perfect location position during the movement of selection of the constantly meshed gear pair, the selection mechanism is provided with a positioning sensor 37b which can be linear or rotary and which senses the position of the locating tube 1 and informs the governing unit 18 so that it monitors and controls the system.

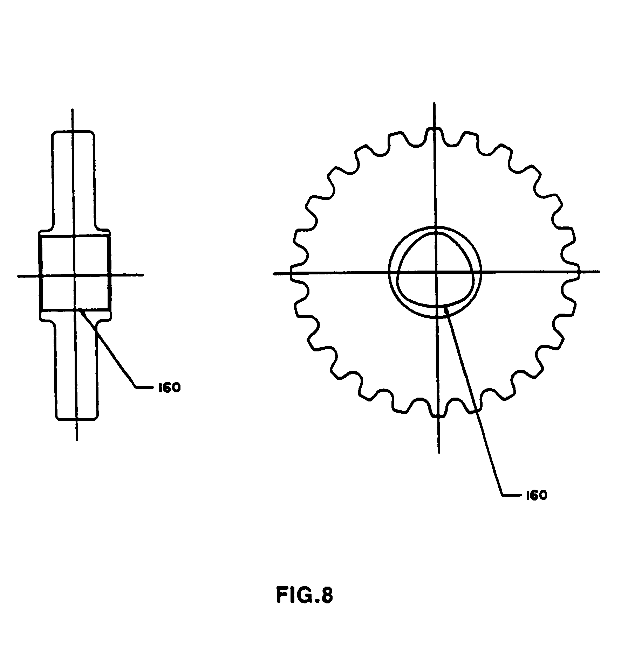

Figure 8 shows the gears mounted on the parallel shaft 34 which are secured by means of a type of polygonal coupling 160, that is, the central hole of the gear has not a round shape but rather a polygonal shape 160. In figure 8, there is represented the polygonal hole 160 with three sides, but it can have four or more sides. The advantage of this is that it does not need to use keys or internal teeth in the gear for attachment with the corresponding shaft. Parallel shaft 34 also is not circular and in the portion thereof on which the gears of the constantly meshed pairs are mounted on this parallel shaft 34, exactly the same outer polygonal contour 160 is present. Therefore, the gear and the shaft are always attached for transmitting rotation and torque. The locating tube 1 has the function of selecting the speed ratios by selecting the gear pair to be engaged. In order that the locating tube 1 effects the selection, it slides within the hollow shaft 2 so that the centerline of the radial holes which contain the engagement pins 4 is positioned, this centerline 151 as seen in figure 7 is located in the center of the internal teeth 4c of the gear to be selected. So that hollow shaft 2 rotates always integral with the locating tube 1, they are attached by a key 3 permitting relative axial sliding between the two, but keeping them always with the same rotation. In the locating tube 1 with radial holes are disposed engagement pins 4 of the same number as the number of holes, which pins serve to connect the selected gear to the hollow shaft 2. Thereby said gear and its pair transmit torque and rotation. All remaining constantly meshed gear pairs , rotate idly without transmitting rotation and torque. The engagement pins 4 as shown in figure 1B, are radially mounted on the end of the locating tube 1 and are radially disposed and are equally spaced on the diameter according to figure 1A. Engagement pins 4 have at their engaging end, teeth 4a which are coupled to the internal teeth 4c as shown in figure 7. In figures 1A and 1B, engagement pin 4 is represented with only one tooth 4a, but it can be provided with one or more teeth 4a which will be coupled to the internal teeth of the gears 4c. At the other end, the engagement pin 4 has a sliding inclined plane 4b with a suitable angle to slide over an actuating tip 5. Engagement pins 4 are engaged on the actuating tip 5 in guides 6 shown in figure 1C. Engagement pins 4 have slots 6A permitting this attachment. In the engaging movement, when the engagement pins 4 are actuated outwardly against the internal teeth 4c, engagement pin 4 bears on the actuating tip 5. In the disengagement movement, when the engagement pin 4 is retracted from the internal tooth 4c, said engagement pin is pulled by the guides 6 of the actuating tip 5, to pull engagement pin 4 through the slot 6a thereof and through the surface 6b of said slot 6a which is T-shaped. Guides 6 of the actuating tip 5 can be sliding or rolling guides. T-shaped slot 6a serves to keep the engagement pin 4 attached to the actuating tip 5 so that this is extracted for disengagement. To retract said engagement pins 4, retracting springs may be used as a solution, when a "T"-profile is no longer necessary for retraction. The springs are disposed in a radial fashion like the pins, always applying a retraction force to engagement pins 4. Once the actuating tip 5 is retracted, engagement pins 4 are also retracted by effect of the springs. When the engagement pins 4 are totally retracted with the locating tube 1, they will have a diameter smaller that the diameter of hollow shaft 2 so that they move with the locating tube 1 to select a new gear pair without said engagement pins 4 rubbing on or interfering with the internal hole of hollow shaft 2 during the selection movement of locating tube 1. The selection movement is monitored by a positioning sensor 37b to ensure accuracy of said positioning. The movement of location and selection of the gear pair to be selectively meshed is made by a lug nut 7 fixed to locating tube locating tube 1 via a roller bearing 8 permitting the lug nut 7 to cause the locating tube 1 which is rotating with hollow shaft 2, to slide within hollow shaft 2 and to select the gear of the gear pair to be meshed. Lug nut 7 does not rotate with locating tube 1 because of the roller bearing 8 but, through this roller bearing 8 pushs or pulls locating tube 1 to the selection position. The part which makes lug nut 7 to slide in order to pull or push locating tube 1 into selection is a spindle 9 which is supported on a housing 10 of the gearbox, through two roller bearings 11, 12. To this spindle 9, there is splined a synchronizing pulley 13 or a toothed pulley which, through a synchronizing toothed belt or chain 14 is given movement from a direct or alternating current servomotor 15. This motor 15 is driven by a servo-actuator (15a) which is schematically depicted in figure 6. Servo-actuator 15a receives drives to actuate motor 15 to actuate motor 14 of the governing unit 18. The movement of the engagement pins 4 is effected through longitudinal displacement axially and relative to the locating tube 1, of the actuating tip 5 to which engagement pins 4 are engaged through slots in the bases of said engagement pins 4, in the guides 6 of said actuating tip 5. The engagement movements of said engagement pins 4 are radial and perpendicular to the axial displacement of the actuating tip 5. The actuating tip 5 besides rotating together with said locating tube 1 displacing with this locating tube 1 axially to cause the location and selection movement, has also a relative axial movement with this locating tube 1, which axial movement is inherent to the actuating tip 5 which is independent of locating tube 1. This axial movement permits the transfer of axial movement to engagement pins 4 through an end cone of the actuating tip 5 and through said end with inclined plane 4b of engagement pins 4. Actuating tip 5 rotates together with locating tube 1 since it is secured to engagement pins 4 and these are mounted within locating tube 1 by the radial holes. The positioning accuracy of the actuating tip 5 to effect the engagement or disengagement event is ensured by the monitoring made by the positioning sensor 37a which could be linear or rotary. As a first alternative, to figure 1, so that the actuating tip 5 effects axial movement and promotes radial movement of engagement pins 4 into locating tube 1 and engages the gear of the selected gear pair, said actuating tip 5 is given axial movement from an extended screw 25 which does not rotate but is only axially displaced pushing actuating tip 5 through a roller bearing 31. Extended screw 25 does not rotate since it is engaged in an anchoring tube 27 through a key 27a and this anchoring tube is engaged to a cap 28 which in turn is secured to the transmission housing 10. An extended nut 24 which is mounted within locating tube 1 and axially therewith does not rotate with the tube since there is a roller bearing 30 therebetween that permits that said extended nut 24 is only translated axially with locating tube 1. By rotating independently of locating tube 1, extended nut 24 causes the extended screw 25 to move axially within anchoring tube 27. Thus extended screw 25 pulls or pushes actuating tip 5. Extended nut 24 rotates by being given rotation movement from a turning tube 22 through key 23 which attaches said extended nut 24 to a turning tube 22. Turning tube 22 has its own rotational movement. Turning tube 22 does not displace axially in relation to the transmission housing 10 since it is attached to this transmission housing 10 through roller bearing 29. Extended nut 24 is always attached to turning tube 22 through key 23 as the turning nut 24 which is mounted within locating tube 1 moves axially therewith. Extended nut 24 enters and exits within turning tube 22 as locating tube 1 is displaced for selection since extended nut 24 is attached to locating tube 1 by roller bearing 30. Turning tube 22 rotates by means of synchronizing or toothed pulley 20 which is secured to said turning tube 22 through key 21. Synchronizing or toothed pulley 20 is driven through the synchronizing belt or chain 32 which is rotated by the direct or alternating current motor 19 through said synchronizing or toothed pulley 20. Extended nut 24 rotates and thereby actuates extended screw 25 to be axially displaced rightwards or leftwards, depending upon the turning direction imposed by the direct or alternating current motor 19. Therefore, with movement of actuating tip 5 caused by the axial movement of extended screw 25 to which said actuating tip 5 is attached through roller bearing 31, engagement pins 4 engage or disengage the gear of the selected gear pair.

As a second alternative, in accordance with figure 2, so that actuating tip 5 carries out the axial movement and causes radial movement of engagement pins 4 within locating tube 1 to engage the gear of the selected gear pair, said actuating tip 5 is given the axial movement from an actuation piston 40 which does not rotate since it forms part of an actuation cylinder 41. Between actuation piston 40 and actuation cylinder 41, there only exists axial movement and so that one does not rotate in relation to the other, these two are attached through key 42. Since the actuating tip 5 is attached to engagement pins 4 and this assembly always rotates with hollow shaft 2, in order that non-rotating actuation piston 40 can push and pull actuating tip 5, said actuation piston 40 is attached to said actuating tip 5 through roller bearing 43 which permits transmission of the axial movement from the actuation piston 40 to said actuating tip 5. Actuation piston 40 moves axially within actuation cylinder 41 by hydraulic or pneumatic action, and the actuation movement of said actuation piston 40 is such that engagement pins 4 can engage internal teeth 4c of the gear of the selected pair, and the hydraulic fluid or compressed air will be sent to an actuation chamber 44 of said actuation cylinder 41 through actuation orifice 45 in the axis of actuation piston 40, a deactuation chamber 46 being connected in a free of pressure fashion to a tank or outlet 56. So that engagement pins 4 are pulled to disengage teeth 4a from internal teeth 4c of the gear from the previously selected pair and that will be now shifted, hydraulic fluid or compressed air will be sent to deactuation chamber 46 through deactuation orifice 47 in the axis of actuation piston 40, actuation chamber being connected in a free of pressure fashion to tank or outlet 56. Engagement pins 4 are pulled inwardly of locating tube 1 permitting that it is displaced for selection. Actuation cylinder 41 does not rotate with hollow shaft 2 but rather it is displaced axially therewith during movement of selection of the gear pair for operation. Actuation cylinder 41 is attached to hollow shaft 2 through roller bearings 48 which allow for relative rotation therebetween and do not allow for axial movement therebetween. Actuation cylinder 41 has an extension 49 which is connected to an anchoring tube 50. Extension 49 enters and exits anchoring tube 50 during selection movement of the gear pair and anchoring tube 50 is engaged with the housing of the transmission box 10 and therefore is secured without moving. A key 51 attaches said anchoring tube 50 with extension 49 of actuation cylinder 41, thus causing said actuation cylinder 41 not to have relative rotation with housing 10 and have only relative axial movement with housing 10. Said extension 49 also houses within it, actuation and deactuation ducts 52 and 52 which carry hydraulic fluid or compressed air. Flow of compressed air or hydraulic fluid into actuation cylinder 41, to effect actuation of actuation piston 40 and consequently to effect engagement and disengagement of the selected gear pair through engagement pins 4 is made by actuation and deactuation ducts 52 and 53. Governing unit 18 operates a relay and coil logic 54 which directs hydraulic fluid or compressed air from a source 55 of hydraulic fluid or compressed air to the actuation or deactuation duct 52 and 53 with return to zero pressure into tank 56 or outlet on the opposite side to the actuation effect.

As a third alternative, according to figure 3, in order that actuating tip 5 can effect axial movement and cause radial movement of engagement pins 4 within locating tube 1 and engage the gear of the selected gear pair, said actuating tip 5 is given axial movement from an actuation pin 70 which does not rotate since it forms part of an actuating electromagnetic solenoid 71. Between actuation pin 70 and electromagnetic solenoid 71, there is only relative axial movement, they are attached by a key 72 so that one does not rotate relative to the other. Since actuating tip 5 is attached to engagement pins 4 and this assembly always rotates with hollow shaft 2, in order that actuating pin 70, which does not rotate, can push or pull actuating tip 5 ; said actuating pin 70 is attached to said actuating tip 5 through a roller bearing 73 which permits transmission of axial movement from actuating pin 70 to actuating tip 5. Actuating pin 70 moves axially within electromagnetic solenoid 71 by mechanical or magnetic action through the effect of a spring 74. The actuation movement of actuating pin 70 pushes engagement pins 4 to engage teeth 4a into the internal teeth 4c of the gear of the selected pair. The electrical potential difference applied to the coil 75 of electromagnetic solenoid 74 is then removed causing spring 74 to push actuating pin 70 to effect engagement movement of actuating tip 5. In the gear position, with all engagement pins 4 coupled to the gear, actuating pin 70 is retained by the action of spring 74 and by a mechanical lock 76. So that engagement pins 4 are pulled to disengage teeth 4a from the internal teeth 4c of the gear of the previously selected pair and that will be now shifted, an electric potential difference is applied to the coil 75 of the electromagnetic solenoid 71 to perform disengagement movement of actuating tip 5. The movement of actuating pin 70 is caused by the electromagnetic force induced by the coil 75 of electromagnetic solenoid 71 which overcomes the force of spring 74 and the force of the mechanical lock 76 and releases the engagement pins 4 into locating tube 1, so that the latter can be displaced to effect selection movement for the new gear pair. Electromagnetic solenoid 71 does not rotate with hollow shaft 2 but rather displaces axially therewith during the selection movement for the new gear pair for. Electromagnetic solenoid 71 is attached to hollow shaft 2 through two roller bearings 78 which permit relative rotation therebetween, but do not permit relative axial movement therebetween. Electromagnetic solenoid has an extension 79 which is connected to an anchoring tube 80. Extension 79 enters and exits anchoring tube 80 during the selection movement of the gear pair and anchoring tube 80 is engaged in the housing of the transmission box 10, being therefore fixed and with no movement. A key 81 attaches said anchoring tube 80 to said extension 79 of the electromagnetic solenoid 71, causing said electromagnetic solenoid 71 not to have relative rotation with housing 10 and have only relative axial movement with housing 10. Said extension 79 houses also within it cables 82 which will transmit the electrical current to impart an electric potential difference to the coil 75 of electromagnetic solenoid 71. Governing unit 19 operates a relay logic 83 which can energize or de-energize coil 75 of electromagnetic solenoid 71 by receiving energy from an electric voltage source 84. When coil 75 is energized, actuating pin 70 overcomes the force of spring 74 and of mechanical lock 76 and then disengagement is effected. Without energy, coil 75 does not act on the actuating pin 70 and therefore the spring 74 operates for engagement of engagement pins 4. In order to ensure that locating tube 1 effects accurately the location movement for speed selection, the mechanism is provided with a sensor for measuring such position so that governing unit 18 monitors and controls the correct position for ratio selection. To ensure that engagement pins 4 reach the engagement and disengagement points, there is in the system a sensor measuring the precise position of the engaged pin and of the disengaged pin so that governing unit 18 monitors and controls the correct position for speed engagement and disengagement.

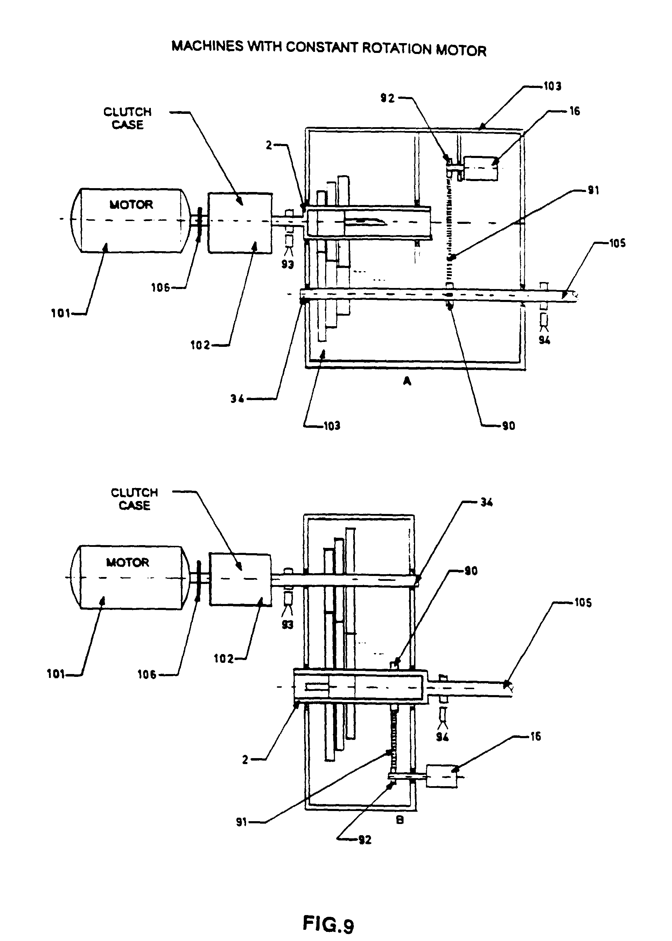

The present invention also deals with a synchronization system for the rotary parts using the continuous or alternating current motor 16 driven by the electro-electronic actuator 16a of figures 1 and 6. For the possibilities of synchronization, the system will depend on how the machine has been assembled: with a constant speed motor 101 or a variable speed motor 121. This will depend also on the assembly of hollow shaft 2 which contains the gear shift mechanism of the constantly meshed gear pairs for mutually exclusive actuation, if this hollow shaft 2 is mounted in the rotation input side or in the output rotation side 105. If the motor (101) of the machine is of continuous speed, according to figure 9, that is, if this motor works with a fixed speed, supplying this speed to the machine through clutch 102 and the transmission box 103, we can have then the following physical and mathematical considerations:

Rotation of the input shaft of the transmission box at the motor side: **Nm**

Rotation of the box shaft:         **Ns**
Transmission Ratio of a Generic Pair:         **Ri**
Transmission Ratio of another Generic Pair: **Rj**
Index related to a Generic Pair:         **(i)**
Index related to a Generic Pair:         **(j)**

By the transmission equation of mechanics, we have, for a determined generic pair of gears (i):

$$Nm(i)=Ns(i)xR(i)$$

For the other generic gear pair (j) we have:

$$Nm(j)=Ns(j)xR(j)$$

Since the motor in this case has a set constant speed, then it is clear that: **Nm(j)=Nm(i)=Nm**

Therefore, for passing from the gear pair (i) to the gear pair (j), said output speeds are related by the following expression:

$$Ns(i)xR(i)=Ns(j)xR(j)$$

Then, the end output rotation will be:

$$Ns(j)=Ns(i)xR(i)/R(j)$$

Ns(j) differs from Ns(i) by the proportion of the transmission ratios R(i) and R(j). Therefore, synchronization motor 16 from the moment wherein the clutch is released and from the moment where the gear pair (i) is disengaged for ratio shift, the synchronization motor 16 will have to cause the rotation of output shaft, Ns(j), to become equal to that which was prevailing prior to releasing of clutch, Ns(i), multiplied by ratio **R(i)/R(j)**, in a predetermined time. Therefore, the rotating masses are accelerated as a function of ratio **R(i)/R(j)**. At the moment that rotation R(j) has been attained, the event of ratio shift takes place, that is, there is an engagement of the gear pair 3. For precise accuracy of the phenomenon, the input and output rotations are constantly monitored by rotation sensors, by output sensor 94 and by the input sensor 93. Independent of where hollow shaft 2 is mounted , the synchronism system should be mounted in the output rotation side 105, since it is on this side where the rotating masses have to be accelerated or decelerated.

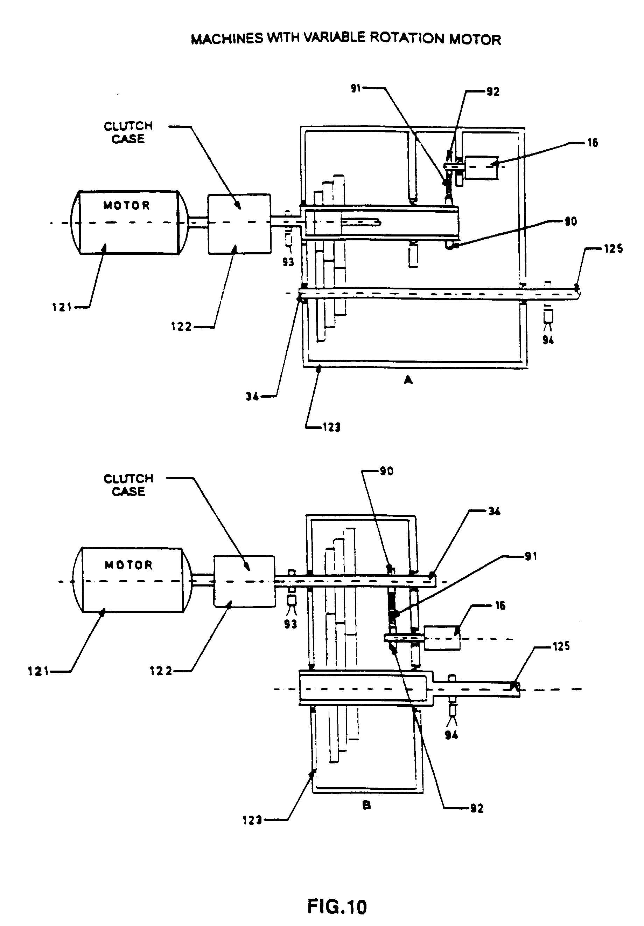

If in this case, the machine motor or vehicle engine 121 is of variable speed, figure 10, supplying this speed to the machine or vehicle from clutch 122 and then to the transmission box 123, then we have the following equations with the variables already known for a determined generic pair (i):

$$Nm(i)=Ns(i)xR(i)$$

For the other generic pair (j), we have:

$$Nm(j)=Ns(j)xR(j)$$

Since the motor is of variable speed, and considering that in the period of time of speed shift, the speed remains unchanged in this period of time, then:

$$Ns(i)=Ns(j)=Ns$$

Therefore, for passing from the meshed pair (i) to meshed pair (j) of gears, said input speeds are related through the following expression:

$$Nm(i)/R(i)=Nm(j)/R(j)$$

Then, the end input speed should be:

$$Nm(j)=Nm(i)x(R(j)/R(i))$$

Nm(j) differs from Nm(i) by the inverse proportion of the transmission ratios R(i) and R(j). Therefore, the synchronise motor 16, starting from the moment in which clutch is released and from the moment in which the gear pair (i) is disengaged for ratio shift, will have to cause rotation of the input shaft, Nm(j), to be equal to the speed that was prevailing prior to releasing of the clutch, Nm(i), multiplied by the inverse proportion **R(i)/R(j)**, in a predetermined time. Thereby, the rotating masses are decelerated or accelerated as a function of the inverse ratio **R(i)/R(j)**. At the moment in that rotation Nm(j) has been attained, the ratio shift event takes place, that is, the gear pair (j) is engaged. For precise accuracy of the phenomenon, the input and output rotations are constantly monitored by the rotation sensors, by the output sensor 94 and by the input sensor 93. Independently from where hollow shaft 2 is mounted, either on the rotation output side 125, as in figure 10B, or on the rotation input side, as in figure 10A, the synchronization system must be mounted at the input side, since it is in this side that they have to be accelerated or decelerated. The synchronization mechanism applied to the four alternatives disclosed is composed of a direct or alternating current motor 16, driven by an electro-electronic servo-actuator 16A which, in turn, is governed from a governing unit 18 for operation thereof. The direct or alternating current motor 16 has at one shaft thereof, a toothed or synchronizing pulley 91 which, in turn, is connected to transmit rotation to the toothed or synchronizing pulley 90 which is engaged in the shaft to which acceleration or deceleration will be imparted so that synchronism of rotations is achieved. It is only during such synchronization event that the direct or alternating current motor 16 will be energized and in the other events it will be always off and idle.

## Claims

1. A transmission apparatus having a gearbox housing (10), a multi-ratio draw key gearbox and a gearshifting mechanism, the gearbox having a plurality of constantly meshed gear pairs arranged on an associated shaft, each gear pair defining a respective gear ratio, and the gearshifting mechanism being automatically controlled and monitored by a governing unit (18) which is operable both manually via a shift lever (120) and automatically as may be required,

   wherein each of said gear pairs has a first state in which said meshed pair is connected to transmit torque from a gearbox input shaft to a gearbox output shaft, and a second state where said meshed pair idles, **characterised by:**

   a set of servo-motors (15,16,19) and a set of servo actuators, each motor being controlled by a servo actuator (17,15a, 16a,19a) respectively, each servo motor performing a specific function, said set of motors comprising:

   an electric select motor (15) operatively connected via a selecting mechanism to said gearbox so as to select a unique meshed gear pair from said plurality of gear pairs, thereby providing a defined gear ratio,

   an electric synchronise motor (16) that is operatively connected via a synchronising mechanism to said gearbox for synchronising rotation of a selected meshed gear pair, and

   an engaging motor (19) operatively connected via an engagement mechanism to said gearbox so as to set said selected gear pair from said second state in which said gear pair idles to said first state, whereby said selected pair transmits torque.

2. A method of operating a gearshifting mechanism in a transmission system having a multi-ratio draw key gearbox, and a clutch means (102,122), the gearbox having a plurality of constantly meshed gear pairs, each gear pair defining a respective gear ratio, and the clutch means selectively connecting said multi-ratio gearbox to an engine or motor (101,121),

wherein each of said gear pairs has a first state in which said meshed pair is connected to transmit torque from a gearbox input shaft to a gearbox output shaft, and a second state in which said meshed pair idles,

the method is <u>characterised</u> by:

-- operating a clutch motor (33) to declutch said clutch means thereby interrupting the power transmission link,

-- operating an engaging motor (19) so as to set said plurality of gear pairs into said second state whereby said gear pairs idle,

-- operating an electric select motor (15) to select a unique meshed gear pair from said plurality of gear pairs,

-- operating an electric synchronise motor (16) for synchronising rotation of said selected meshed gear pair,

-- operating said engaging motor (19) to set said selected gear to said first state, whereby said selected pair transmits torque, and

-- and operating said clutch motor (33) to engage the clutch means to complete the power transmission link.

3. The apparatus of claim 1, wherein the governing unit (18), in a logical and sequential way, sends signals to the servo actuators based on a programmed logic recorded in an electronic memory of said governing unit (18) which can receive signals from the action of an operator or driver acting on levers (120) or another actuation means to cause ratio shift and wherein the signals causing ratio shift can be derived from a set of sensors (37) to effect automatic operation.

4. The apparatus of claim 1, wherein

- said selecting mechanism is mounted internally of one of the gearbox shafts, said one gearbox shaft (2) is hollow and all the gears on the shaft forming part of the constantly meshed gear pairs are mounted so that they can rotate on the hollow shaft (2) on bearings (152) disposed in the bore of the gears,

- said engagement mechanism engages only one gear pair to the hollow shaft (2),

- the selecting mechanism comprises a locating tube (1) having a set of radial holes equally distributed over the diameter of said tube (1) and spaced by an equal angle, each hole supporting an engagement pin (4) so that said tube (1) rotates along with the hollow shaft (2) and slides therein to the location of a centerline (151) of the gear of the constantly meshed pair chosen for selection,

- a lug nut which is engaged with the locating tube (1) through a roller bearing (8) does not rotate in relation to the gearbox housing (10) and is actuated by a spindle (9) to impart to said tube (1) an axial movement relative to the hollow shaft (2) and the spindle (9) by pulleys (13, 13a) or by belts or chains (14) driven by the select motor (15), and

- the exact accuracy of the centerline of said locating tube (1) with the centerline (151) of the gear of the pair to be selected is assured by a positioning sensor (37b) which detects the position of the locating tube (1) and informs the governing unit (18).

5. The apparatus of claim 4, wherein

- said engagement mechanism is mounted internally of the locating tube (1) and comprises a set of said engagement pins (4), which pins (4) have radial movement enabling notches (4a) at its tips to engage in female notches (4c) of the bore of the selected gear to transmit torque and rotation and selectively providing disengagement of said pins (4), and

- said pins (4) are extended or retracted by an actuating tip (5) which has an inclined plane (4b) to urge said pins (4) radially for engagement due to axial movement of the actuating tip (5) or to retract said pins (4) through linkages such as guides (6) from the notches (4c) of the gears for disengagement, whereby the retraction of said engagement pins (4) is aided by springs.

6. The apparatus of claim 5, wherein

- said engaging motor (19) has dual rotation direction, one for the engagement and the other for the disengagement movement, said motor (19) actuates a first pulley or toothed pulley (20a) which, by the toothed belt or chain (32), moves a second pulley or toothed pulley (20) which is attached by a key means (21) to a turning tube (22) transmitting movement to a turning nut (24) through a key means (23),

- upon rotating said turning nut (24) axial movement is imparted to said actuating tip (5) providing engagement or disengagement by an extended screw (25) which is attached to said gearbox housing (10) through an anchoring tube (27) engaged therein, whereby axial movement of said actuating tip (5) is independent from rotation both of the locating tube (1) and the hollow shaft (2) due to roller bearings (30 and 31) which attach said actuating tip (5) and said extended screw (25), and wherein the end of movement of the engagement and disengagement stroke is sensed by a displacement sensor (37a) which can be a rotary or linear sensor and which sends information to the governing unit (18) so that the governing unit (18) drives and governs the system.

7. The apparatus of claim 5, wherein

- said engaging motor (19) comprises a hydraulic or pneumatic motor driven and governed by the governing unit (18) controlling entry of hydraulic fluid or compressed air from a source (55) of hydraulic fluid or compressed air, whereby said fluid or air goes to an actuation piston (40) provided in an actuation cylinder (41) through an actuation duct (52) so as to urge said piston into engagement with the actuating tip (5),
- said cylinder (41) is rotationally decoupled from the hollow shaft (2) by roller bearings (48) therebetween and is attached to the gearbox housing (10) through an anchoring tube (50) through a key (51), whereby between the anchoring tube (50) and said cylinder (51) there is only relative axial movement,
- said piston (40) is mounted in roller bearings (43) so as to be rotationally decoupled from said actuating tip (5), said hollow shaft (2) and said locating tube (1), and
- said piston (40) is connected to said cylinder (41) by a key (42), and, for movement of said piston (40) for disengagement, the governing unit (18) opens a deactuation duct (53) to a deactuation chamber (46) so that disengagement movement of the mechanism is effected.

8. The apparatus of claim 5, wherein

- said engaging motor (19) comprises an actuating electromagnetic solenoid (71) driven and governed by said governing unit (18) controlling energization of a coil (75) from an electric voltage source (84) via cables (82) so that there is

 -- an engagement movement of an actuation pin (70) when said coil is de-energized, the bias of a spring (74) pushes said actuation pin (70) towards engagement movement with said actuating tip (5), this engagement movement is limited by the end of the mechanical stroke and by the action of a mechanical lock (76), and
 -- a disengagement movement, when governing unit (18) drives a relay logic (83) to energize the coil (75) by said electric voltage source (84), the energized coil (75) of the solenoid (71) causing said actuation pin (70) to overcome the force of the spring (74) and of the mechanical lock (76) to thereby effect disengagement movement, and

- said solenoid (71) is integral to the actuation pin (70) which is rotationally decoupled from said actuating tip (5), said hollow shaft (2) and said locating tube (1) by roller bearings (73, 78), and said solenoid (71) is attached to the gearbox housing (10) through an anchoring tube (80) by a key (81) to have a relative axial movement.

9. The apparatus of claim 5, wherein said actuating tip (5) which, for effecting engagement movement, urges said engagement pins (4) radially outward, and for disengagement movement, pulls said engagement pins (4) radially inward until retracted entirely into said locating tube (1) allowing the same to slide axially within said hollow shaft (2) in a free manner and with no interference.

10. The apparatus of claim 1, wherein the shaft (34) on which the non-idling gears (211-216) of the constantly meshed pairs are mounted has a polygonal shape with rounded corners (164) and wherein the gears mounted on this shaft (34) have a central hole which has the same polygonal shape with rounded corners (160).

11. The apparatus of claim 1, wherein said synchronise motor (16) is driven by an electro-electronic servoactuator (16a) which is in turn governed and controlled by said governing unit (18).

12. The apparatus of claim 11 further comprising a constant speed drive engine, and wherein said synchronising mechanism actuates the gearbox output shaft via a first synchronising pulley (92) driven from said synchronise motor (16) transmitting, through a synchronising belt or chain (91), rotation to a second synchronising or toothed pulley (90) attached to the output shaft via a key means.

13. The apparatus of claim 11 and having a variable speed drive engine, wherein the synchronising mechanism acts on the gearbox input shaft via a first toothed or synchronising pulley (92) attached to the synchronise motor (16) transmitting, through a synchronising belt or chain (91), rotation to a second synchronising or toothed pulley (90) attached to the input shaft through a key means.

14. The apparatus of claim 11 having a supply energy motor (101) of constant speed rotation, so that when gear shift is effected to change from a first constantly meshed gear pair to a second one, the synchronise motor (16) makes the speed of the output shaft equal to that speed before releasing the clutch and gear disengagement, multiplied by the transmission ratio of the first constantly meshed gear pair divided by the transmission ratio of the second gear pair, whereby monitoring of said speed is made by a speed sensor (94) sending the actual speed data to the governing unit (18) which drives and governs the synchronise motor (16) through the electro-electronic servoactuator (16a) accelerating or decelerating the rotating parts in order to achieve synchronisation.

15. The apparatus of claim 11 having a supply energy motor (101) of variable speed, so that when gear shift is effected to change from a first constantly meshed gear pair to a second one, the synchronise motor (16) makes the speed of the input shaft equal to the speed at which it was rotating before releasing the clutch and gear disengagement, multiplied by the inverse proportion of the transmission ratio of the first constantly meshed gear pair divided by the transmission ratio of the second gear pair, whereby monitoring of said speed is made by a speed sensor (94) sending the actual speed data to the governing unit (18) which drives and governs the synchronise motor (16) through the electro-electronic servoactuator (16a) accelerating or decelerating the rotating parts in order to achieve synchronisation.

**Patentansprüche**

1. Übertragungs- bzw. Getriebeeinrichtung mit einem Getriebekastengehäuse (10), einem Mehrfachübersetzungs-Ziehkeil-Getriebekasten und einem Getriebeschaltmechanismus, wobei der Getriebekasten mehrere konstant eingreifende Zahnradpaare aufweist, die auf einer zugeordneten Welle angeordnet sind, wobei jedes Zahnradpaar ein jeweiliges Übersetzungsverhältnis definiert und wobei der Getriebeschaltmechanismus automatisch durch eine Steuerungseinheit (18) gesteuert und überwacht wird, welche je nach Erfordernis sowohl manuell über einen Schalthebel (120) als auch automatisch betätigbar ist,

    wobei jedes der Zahnradpaare einen ersten Zustand hat, in welchem das eingreifende Paar verbunden ist, um Drehung von einer Getriebekasten-Eintragswelle zu einer Getriebekasten-Austragswelle zu übertragen, und einen zweiten Zustand, wo das eingreifende Paar leerläuft, **gekennzeichnet durch**:

    einen Satz Servomotoren (15, 16, 19) und einen Satz Servobetätiger, wobei jeder Motor jeweils durch einen Servobetätiger (17, 15a, 16a, 19a) gesteuert wird und wobei jeder Servomotor eine spezielle Funktion ausführt, wobei der Satz der Motoren umfaßt:

einen elektrischen Auswahlmotor (15), der funktionell über einen Auswahlmechanismus mit dem Getriebekasten so verbunden ist, daß ein einziges eingreifendes Zahnradpaar aus der Vielzahl der Zahnradpaare ausgewählt wird, wodurch ein definiertes Übersetzungsverhältnis bereitgestellt wird,

einen elektrischen Synchronisierungsmotor (16), der zum Synchronisieren der Drehung eines ausgewählten eingreifenden Zahnradpaars funktionsmäßig über einen Synchronisierungsmechanismus mit dem Getriebekasten verbunden ist, und

einen Eingriffsmotor (19), der funktionsmäßig über einen Eingriffsmechanismus mit dem Getriebekasten so verbunden ist, daß er das ausgewählte Zahnradpaar von dem zweiten Zustand, in welchem das Zahnradpaar leerläuft, in den ersten Zustand versetzt, wodurch das ausgewählte Paar ein Drehmoment überträgt.

2. Verfahren zum Betrieb eines Getriebeschaltmechanismus in einem Übertragungs-bzw. Getriebesystem mit einem Mehrfachverhältnis-Ziehkeil-Getriebekasten und einer Kupplungseinrichtung, wobei der Getriebekasten mehrere konstant eingreifende Zahnradpaare aufweist, wobei jedes Zahnradpaar ein jeweiliges Übersetzungsverhältnis definiert und wobei die Kupplungseinrichtung selektiv den Mehrfachübersetzungs-Getriebekasten mit einer Maschine oder einem Motor (101, 121) verbindet,

    wobei jedes der Zahnradpaare einen ersten Zustand hat, in welchem das eingreifende Paar verbunden ist, um Drehmoment von einer Getriebekasten-Eintragswelle zu einer Getriebekasten-Austragswelle zu übertragen, und einen zweiten Zustand, in welchem das eingreifende Paar leerläuft, wobei das Verfahren **gekennzeichnet ist durch**:

-- die Tätigkeit eines Kupplungsmotors (33) zum Entkuppeln der Kupplungseinrichtung, wodurch die Kraftübertragungsverbindung unterbrochen wird,

-- die Tätigkeit eines Eingriffsmotors (19), um so die Vielzahl der Zahnradpaare in den zweiten Zustand zu versetzen, wodurch die Zahnradpaare leerlaufen,

-- die Tätigkeit eines elektrischen Auswahlmotors (15), um ein einziges eingreifendes Zahnradpaar aus der Vielzahl der Zahnradpaare auszuwählen,

-- die Tätigkeit eines elektrischen Synchronisierungsmotors (16) zum Synchronisieren der Drehung des ausgewählten eingreifenden Zahnradpaares,

-- die Tätigkeit des Eingriffsmotors (19), um das ausgewählte Zahnrad in den ersten Zustand zu versetzen, wodurch das ausgewählte Paar Drehmoment überträgt, und

-- die Tätigkeit des Kupplungsmotors (33), um die Kupplungseinrichtung in Eingriff zu bringen, um die Kraftübertragungsverbindung zu vervollständigen.

3. Einrichtung nach Anspruch 1, bei der die Steuerungseinheit (18) in logischer und abfolgender Weise basierend auf einer programmierten Logik Signale zu den Servobetätigern sendet, die in einem elektronischen Speicher der Steuerungseinheit (18) aufgezeichnet sind, welche Signale durch die Tätigkeit eines Bedieners oder Fahrers, der Hebel (120) betätigt, oder von einer weiteren Betätigungseinrichtung empfangen kann, um einen Übersetzungswechsel zu bewirken, und wobei die Signale, die den Übersetzungswechsel bewirken, aus dem Sensorensatz (37) hergeleitet werden können, um einen automatischen Betrieb zu bewirken.

4. Einrichtung nach Anspruch 1, bei der

- der Auswahlmechanismus innerhalb einer der Getriebekastenwellen angebracht ist, wobei eine Getriebekastenwelle (2) hohl ist und alle Zahnräder auf der Welle, die einen Teil der konstant eingreifenden Zahnradpaare bilden, so angebracht sind, daß sie sich auf der Hohlwelle (2) auf Lagern (152) drehen können, die in der Bohrung der Zahnräder angeordnet sind,

- der Eingriffsmechanismus ein Zahnradpaar mit der Hohlwelle (2) in Eingriff bringt,

- der Auswahlmechanismus ein Anordnungsrohr (1) umfaßt, mit einem Satz radialer Löcher, die gleichmäßig über den Durchmesser des Rohrs (1) verteilt und in einem gleichen Winkel beabstandet sind, wobei jedes Loch einen Eingriffsstift (1) trägt. so daß sich das Rohr zusammen mit der Hohlwelle (2) dreht und darin zu der Position einer Mittellinie (151) des Zahnrades des konstant eingreifenden Paares gleitet, das zur Auswahl ausgewählt wurde;

- eine Stützmutter, welche mit dem Anordnungsrohr (1) durch ein Rollenlager (8) im Eingriff ist, sich gegenüber dem Getriebekastengehäuse (10) nicht dreht und durch eine Spindel (9) betätigt wird, um dem Rohr (1) eine axiale Bewegung relativ zur Hohlwelle (2) und zur Spindel (9) durch Scheiben (13, 13a) oder über Riemen oder Ketten (14) aufzugeben, die durch den Auswahlmotor (15) getrieben werden, und

- die exakte Ausrichtung der Mittellinie des Anordnungsrohrs (1) mit der Mittellinie (151) des Zahnrades aus dem auszuwählenden Paar durch einen Positionierungssensor (37b) sichergestellt wird, welcher die Position des Anordnungsrohres (1) erfaßt und die Steuerungseinheit (18) informiert.

5. Einrichtung nach Anspruch 4, bei der

- der Eingriffsmechanismus innen in dem Anordnungsrohr (1) angebracht ist und einen Satz der Eingriffsstifte (4) umfaßt, wobei die Stifte zur Ermöglichung der radialen Bewegung Nuten (4a) in ihren Spitzen haben, die in weibliche Nuten (4c) der Bohrung des ausgewählten Zahnrads eingreifen, um Drehmoment und Drehung zu übertragen und selektiv ein Lösen der Stifte (4) zur Verfügung zu stellen, und

- die Stifte (4) durch eine Betätigungsspitze (5) ausgefahren oder zurückgefahren werden, welche eine geneigte Fläche (4b) hat, um die Stifte aufgrund der axialen Bewegung der Betätigungsspitze (5) radial in den Eingriff zu drängen oder die Stifte (4) durch Verbindungen, wie z.B. Führungen (6) aus den Nuten (4c) der Zahnräder zum Lösen zurückzuziehen, wobei das Zurückziehen der Eingriffsstifte (4) durch Federn unterstützt wird.

6. Einrichtung nach Anspruch 5, bei der

- der Eingriffsmotor (19) eine Doppeldrehrichtung hat, eine für die Eingriffs- und die andere für die Lösungsbewegung, wobei der Motor (19) eine erste Scheibe oder Zahnscheibe (20a) betätigt, welche durch den Zahnriemen oder die Kette (32) eine zweite Scheibe oder Zahnscheibe (20) bewegt, welche durch eine Keileinrichtung (21) an einem Drehrohr (22) angebracht ist, das die Bewegung auf eine Drehmutter (24) durch eine Keileinrichtung (23) überträgt;

- bei der Drehung der Drehmutter (24) eine axiale Bewegung auf die Betätigungsspitze (5) aufgebracht wird, wobei ein Eingriff oder ein Lösen durch eine verlängerte Schraube (25) vorgesehen wird, welche an dem Getriebekastengehäuse (10) durch ein darin eingreifendes Verankerungsrohr (27) angebracht ist, wodurch die axiale Bewegung der Betätigungsspitze (5) unabhängig ist von der Drehung sowohl des Anordnungsrohrs (1) als auch der Hohlwelle (2), aufgrund der Rollenlagerungen (30 und 31), welche die Betätigungsspitze (5) und die verlängerte Schraube (25) befestigen, und wobei das Ende der Bewegung des Eingriffs- und des Lösungshubes durch einen Verschiebungssensor (37a) erfaßt wird, welcher ein Dreh- oder Linearsensor sein kann und welcher Informationen zur Steuerungseinheit (18) sendet, so daß die Steuerungseinheit (18) das System antreibt und steuert.

7. Einrichtung nach Anspruch 5, bei der

- der Eingriffsmotor (19) einen hydraulischen oder pneumatischen Motor umfaßt, der durch die Steuerungseinheit (18) betrieben und gesteuert wird, die den Eintritt des hydraulischen Fluids oder der Druckluft aus einer Quelle (55) für hydraulisches Fluid oder Druckluft steuert, wodurch das Fluid oder die Luft zu einem Betätigungskolben (40) geht, der in einem Betätigungszylinder (41) vorgesehen ist, durch eine Betätigungsleitung (52), um so den Kolben in Eingriff mit der Betätigungsspitze (5) zu drängen,
- der Zylinder (41) von der Hohlwelle (2) durch Rollenlager (48) zwischen ihnen drehentkoppelt und durch ein Verankerungsrohr (50) an dem Getriebekastengehäuse (10) über einen Keil (51) befestigt ist, wodurch zwischen dem Verankerungsrohr (50) und dem Zylinder (51) nur eine Axial-Relativbewegung stattfindet,
- der Kolben (40) in Rollenlagern (43) befestigt ist, um so von der Betätigungsspitze (5), der Hohlwelle (2) und dem Anordnungsrohr (1) drehentkoppelt zu sein, und
- der Kolben (40) mit dem Zylinder (41) durch einen Keil (42) verbunden ist, und die Steuerungseinheit (18) zur Bewegung des Kolbens (40) zum Lösen eine Deaktivierungsleitung (53) zur Deaktivierungskammer (46) öffnet, so daß die Lösungsbewegung des Mechanismus bewirkt wird.

8. Einrichtung nach Anspruch 5, bei der

- der Eingriffsmotor (19) ein betätigendes elektromagnetisches Solenoid (71) aufweist, das durch die Steuerungseinheit (18) betrieben und gesteuert wird, welche die Erregung einer Spule (75) aus einer elektrischen Spannungsquelle (84) über Kabel (82) steuert, so daß entsteht:

  -- eine Eingriffsbewegung eines Betätigungsstiftes (70), wenn die Spule entregt wird, wobei die Vorspannung einer Feder (74) den Betätigungsstift (70) zur Eingriffsbewegung mit der Betätigungsspitze (5) schiebt, wobei diese Betätigungsbewegung durch das Ende des mechanischen Hubes und durch die Wirkung einer mechanischen Sperre (76) begrenzt ist, und
  -- eine Lösungsbewegung, wenn die Steuerungseinheit (18) eine Relaislogik (83) betreibt, um die Spule (75) durch die elektrische Spannungsquelle (84) anzuregen, wobei die angeregte Spule (75) des Solenoids (71) bewirkt, daß der Betätigungsstift (70) die Kraft der Feder (74) und der mechanischen Sperre (76) überwindet, um so eine Lösungsbewegung zu bewirken, und wobei

- das Solenoid (71) integral mit dem Betätigungsstift (70) ausgebildet ist, welcher von der Betätigungsspitze (5), der Hohlwelle (2) und dem Anordnungsrohr durch Rollenlagerungen (73, 78) drehentkoppelt ist, und wobei das Solenoid (71) durch ein Verankerungsrohr (80) mittels eines Keils (81) am Getriebekastengehäuse (10) befestigt ist, so daß es eine Axial-Relativbewegung aufweist.

9. Einrichtung nach Anspruch 5, bei der die Betätigungsspitze (5), welche zum Bewirken der Eingriffsbewegung die Eingriffsstifte (4) radial nach außen drängt und für die Lösungsbewegung die Eingriffsstifte (4) radial bis zum vollständigen Einziehen nach innen in das Anordnungsrohr (1) einzieht und es denselben gestattet, frei und ohne Beeinträchtigung in der Hohlwelle (2) axial zu gleiten.

10. Einrichtung nach Anspruch 1, bei der die Weile (34), auf welcher die nicht leerlaufenden Zahnräder (211 bis 216) der konstant eingreifenden Paare angebracht sind, eine polygonale Form mit abgerundeten Ecken (146) hat, und wobei die an dieser Welle montierten Zahnräder eine Mittelbohrung haben, welche dieselbe polygonale Form mit gerundeten Ecken (160) aufweist.

11. Einrichtung nach Anspruch 1, bei der der Synchronisierungsmotor (16) durch einen elektro-elektronischen Servobetätiger (16a) angetrieben wird, welcher wiederum durch die Steuerungseinheit (18) gesteuert und geregelt wird.

12. Einrichtung nach Anspruch 11, die ferner eine Antriebsmaschine mit konstanter Drehzahl aufweist und bei der Synchronisierungsmechanismus die Getriebekasten-Austragswelle über eine erste Synchronisierungsscheibe (92) betätigt, die von dem Synchronisierungsmotor (16) angetrieben wird und über einen Synchronisierungsriemen oder eine Kette (91) Rotation zu einer zweiten Synchronisierungs- oder Zahnscheibe (90) überträgt, die an der Austragswelle über eine Keileinrichtung befestigt ist.

13. Einrichtung nach Anspruch 11 mit einer Antriebsmaschine mit variabler Drehzahl, bei der der Synchronisierungsmechanismus auf die erste Getriebekasten-Eintragswelle über eine erste Zahn- oder Synchronisierungsscheibe (92) wirkt, die an dem Synchronisierungsmotor (16) angebracht ist und durch einen Synchronisierungsriemen oder eine Kette (91) die Drehung auf eine zweite Synchronisierungs- oder Zahnscheibe (90) überträgt, die über eine Keileinrichtung an der Eintragswelle befestigt ist.

14. Einrichtung nach Anspruch 11 mit einem Versorgungskraftmotor (101) mit konstanter Drehzahl, so daß, wenn ein Gangwechsel bewirkt wird, um von einem ersten konstant eingreifenden Zahnradpaar zu einem zweiten zu wechseln, der Synchronisierungsmotor (16) die Drehzahl der Austragswelle gleich derjenigen Drehzahl vor dem Lösen der Kupplung und der Zahnradlösung macht, und zwar multipliziert mit dem Übersetzungsverhältnis des ersten konstant eingreifenden Zahnradpaares dividiert durch das Übersetzungsverhältnis des zweiten Zahnradpaares, wobei eine Überwachung der Drehzahl durch einen Drehzahlsensor (94) durchgeführt wird, der die tatsächlichen Drehzahldaten zur Steuerungseinheit (18) sendet, welche den Synchronisierungsmotor (16) betreibt und steuert, und zwar durch den elektro-elektronischen Servobetätiger (16a), der die sich drehenden Teile beschleunigt oder verzögert, um eine Synchronisierung zu erreichen.

15. Einrichtung nach Anspruch 11, mit einem Versorgungskraftmotor (101) mit variabler Drehzahl, so daß, wenn der Gangwechsel bewirkt wird, um von einem ersten konstant eingreifenden Zahnradpaar zu einem zweiten umzuschalten, der Synchronisierungsmotor (16) die Drehzahl der Eingangswelle gleich der Drehzahl macht, bei welcher sie sich vor dem Lösen der Kupplung und der Zahnradlösung dreht, multipliziert mit dem umgekehrten Verhältnis des Übersetzungsverhältnisses des ersten konstant eingreifenden Zahnradpaares, dividiert durch das Übersetzungsverhältnis des zweiten Zahnradpaares, wobei eine Überwachung der Drehzahl durch einen Drehzahlsensor (94) durchgeführt wird, der die tatsächlichen Drehzahldaten zur Steuerungseinheit (18) sendet, welche den Synchronisierungsmotor (16) durch den elektro-elektronischen Servobetätiger (16a) betreibt und steuert und die sich drehenden Teile beschleunigt oder verzögert, um eine Synchronisierung zu erreichen.

**Revendications**

1. Dispositif de transmission ayant un carter d'engrenages (10), un train d'engrenages multirapports à clavette coulissante et un mécanisme de changement de vitesses, le train d'engrenages ayant une pluralité de paires d'engrenages à engrènement permanent agencées sur un arbre associé, chaque paire d'engrenages définissant un rapport d'engrenage respectif, et le mécanisme de changement de vitesses étant automatiquement commandé et surveillé par une unité de contrôle (18) qui peut être actionnée à la fois manuellement par l'intermédiaire d'un levier de vitesse (120) et automatiquement selon les besoins,

dans lequel chacune desdites paires d'engrenages a un premier état dans lequel ladite paire engrenée est connectée pour transmettre un couple d'un arbre d'entrée du train d'engrenages vers un arbre de sortie du train d'engrenages, et un deuxième état dans lequel ladite paire engrenée tourne à vide, caractérisé en ce qu'il comprend:
un jeu de servomoteurs (15, 16, 19) et un jeu de servo-actionneurs, chaque moteur étant commandé par un servo-actionneur (17, 15a, 16a, 19a) respectivement, chaque servomoteur remplissant une fonction spécifique, ledit jeu de moteurs comprenant:
un moteur de sélection électrique (15) connecté de manière fonctionnelle, par l'intermédiaire d'un mécanisme de sélection, audit train d'engrenages de façon à sélectionner une paire unique d'engrenages engrenés parmi ladite pluralité de paires d'engrenages, produisant ainsi un rapport d'engrenage déterminé,
un moteur de synchronisation électrique (16) qui est connecté de manière fonctionnelle, par l'intermédiaire d'un mécanisme de synchronisation, audit train d'engrenages pour synchroniser la rotation d'une paire sélectionnée d'engrenages engrenés, et
un moteur de mise en prise (19) connecté de manière fonctionnelle, par l'intermédiaire d'un mécanisme de mise en prise, audit train d'engrenages de façon à déplacer ladite paire sélectionnée d'engrenages dudit deuxième état dans lequel ladite paire d'engrenages tourne à vide vers ledit premier état, ladite paire sélectionnée pouvant ainsi transmettre un couple.

2. Procédé de fonctionnement d'un mécanisme de changement de vitesses dans un système de transmission ayant un train d'engrenages multirapports à clavette coulissante et des moyens d'embrayage (102, 122), le train d'engrenages ayant une pluralité de paires d'engrenages à engrènement permanent, chaque paire d'engrenages définissant un rapport d'engrenage respectif, et les moyens d'embrayage connectant sélectivement ledit train d'engrenages multirapports à un moteur (101, 121),

dans lequel chacune desdites paires d'engrenages a un premier état dans lequel ladite paire engrenée est connectée pour transmettre un couple d'un arbre d'entrée du train d'engrenages vers un arbre de sortie du train d'engrenages, et un deuxième état dans lequel ladite paire engrenée tourne à vide,

le procédé étant <u>caractérisé</u> par les étapes consistant à:

-- actionner un moteur d'embrayage (33) pour débrayer lesdits moyens d'embrayage, ce qui interrompt la liaison de transmission de puissance,

-- actionner un moteur de mise en prise (19) de façon à placer ladite pluralité de paires d'engrenages dans ledit deuxième état, ce qui fait tourner à vide lesdites paires d'engrenages,

-- actionner un moteur de sélection électrique (15) pour sélectionner une paire unique d'engrenages engrenés parmi ladite pluralité de paires d'engrenages,

-- actionner un moteur de synchronisation électrique (16) pour synchroniser la rotation de ladite paire sélectionnée d'engrenages engrenés,

-- actionner ledit moteur de mise en prise (19) pour placer ledit engrenage sélectionné dans ledit premier état, ladite paire sélectionnée transmettant ainsi un couple, et

-- actionner ledit moteur d'embrayage (33) pour mettre en prise les moyens d'embrayage pour rétablir la liaison de transmission de puissance.

3. Dispositif selon la revendication 1, caractérisé en ce que l'unité de contrôle (18), envoie, de manière logique et séquentielle, des signaux aux servo-actionneurs sur base d'une logique programmée enregistrée dans une mémoire électronique de ladite unité de contrôle (18) qui peut recevoir des signaux suite à l'action d'un opérateur ou d'un conducteur actionnant des leviers (120) ou d'autres moyens d'actionnement pour provoquer un changement de rapport et en ce que les signaux provoquant le changement de rapport peuvent être dérivés à partir d'un jeu de capteurs (37) pour assurer un fonctionnement automatique.

4. Dispositif selon la revendication 1, caractérisé en ce que

- ledit mécanisme de sélection est monté à l'intérieur de l'un des arbres du train d'engrenage, ledit arbre d'engrenage (2) est creux et tous les engrenages sur l'arbre faisant partie des paires d'engrenages à engrènement permanent sont montés de telle façon qu'ils puissent tourner sur l'arbre creux (2) sur des roulements (152) disposés dans l'alésage des engrenages,

- ledit mécanisme de mise en prise ne met en prise qu'une paire d'engrenages sur l'arbre creux (2),

- le mécanisme de sélection comprend un tube de repérage (1) ayant un jeu de trous radiaux répartis uniformément sur tout le diamètre dudit tube (1) et espacés selon un angle égal, chaque trou supportant une broche d'engagement (4) de façon que ledit tube (1) tourne en même temps que l'arbre creux (2) et y coulisse jusqu'à la position d'une ligne centrale (151) de l'engrenage de la paire à engrènement permanent choisie pour la sélection,

- un écrou à oreille qui est en prise avec le tube de repérage (1) par l'intermédiaire d'un roulement à rouleaux (8) ne tourne pas par rapport au carter d'engrenages (10) et est actionné par une tige (9) pour communiquer audit tube (1) un mouvement axial par rapport à l'arbre creux (2) et à la tige (9) par des poulies (13, 13a) ou par des courroies ou des chaînes (14) entraînées par le moteur de sélection (15), et

- l'exactitude de la ligne centrale dudit tube de repérage (1) avec la ligne centrale (151) de l'engrenage de la paire à sélectionner est assurée par un capteur de positionnement (37b) qui détecte la position du tube de repérage (1) et informe l'unité de contrôle (18).

5. Dispositif selon la revendication 4, caractérisé en ce que

- ledit mécanisme de mise en prise est monté à l'intérieur du tube de repérage (1) et comprend un jeu desdites broches d'engagement (4), lesquelles broches (4) ont à leur sommet des crans permettant un mouvement radial (4a) destinés à venir en prise avec des encoches femelles (4c) de l'alésage de l'engrenage sélectionné pour transmettre un couple et une rotation et assurer sélectivement le dégagement desdites broches (4), et

- lesdites broches (4) sont avancées ou retirées par une pointe d'actionnement (5) qui a un plan incliné (4b) pour pousser lesdites broches (4) radialement pour assurer leur engagement grâce au mouvement axial de la pointe d'actionnement (5) ou pour retirer lesdites broches (4), par l'intermédiaire de mécanismes tels que des guides (6), des encoches (4c) des engrenages pour assurer leur dégagement, le retrait desdites broches d'engagement (4) étant facilité par des ressorts.

6. Dispositif selon la revendication 5, caractérisé en ce que

- ledit moteur de mise en prise (19) a un double sens de rotation, l'un pour la mise en prise et l'autre pour le mouvement de dégagement, ledit moteur (19) actionne une première poulie ou poulie dentée (20a) qui, par la courroie dentée ou la chaîne (32), déplace une deuxième poulie ou poulie dentée (20) qui est fixée par des moyens à clavette (21) à un tube rotatif (22) transmettant le mouvement à un écrou rotatif (24) par l'intermédiaire de moyens à clavette (23),

- à la mise en rotation dudit écrou rotatif (24), un mouvement axial est communiqué à ladite pointe d'actionnement (5) assurant un engagement ou un dégagement par une vis allongée (25) qui est fixée audit carter d'engrenages (10) par l'intermédiaire d'un tube d'ancrage (27) en prise dans celui-ci, le mouvement axial de ladite pointe d'actionnement (5) étant indépendant de la rotation tant du tube de repérage (1) que de l'arbre creux (2) en raison de roulements à rouleaux (30 et 31) qui fixent ladite pointe d'actionnement (5) et ladite vis allongée (25), et en ce que la fin du mouvement de la course d'engagement ou de dégagement est détectée par un capteur de déplacement (37a) qui peut être un capteur rotatif ou linéaire et qui envoie des informations à l'unité de contrôle (18) de façon que l'unité de contrôle (18) actionne et contrôle le système.

7. Dispositif selon la revendication 5, caractérisé en ce que

- ledit moteur de mise en prise (19) comprend un moteur hydraulique ou pneumatique activé et contrôlé par l'unité de contrôle (18) commandant l'entrée de fluide hydraulique ou d'air comprimé à partir d'une source (55) de fluide hydraulique ou d'air comprimé, ledit fluide ou air passant dans un piston d'actionnement (40) monté dans un cylindre d'actionnement (41) par l'intermédiaire d'un conduit d'actionnement (52) de façon à pousser ledit piston pour le mettre en prise avec la pointe d'actionnement (5),
- ledit cylindre (41) est découplé, d'une manière permettant la rotation, de l'arbre creux (2) par des roulements à rouleaux (48) entre ceux-ci et il est fixé au carter d'engrenages (10) par l'intermédiaire d'un tube d'ancrage (50) par l'intermédiaire d'une clavette (51), ce qui ne laisse entre le tube d'ancrage (50) et ledit cylindre (41) qu'un mouvement axial relatif,
- ledit piston (40) est monté dans des roulements à rouleaux (43) de façon à être découplé, d'une manière permettant la rotation, de ladite pointe d'actionnement (5), dudit arbre creux (2) et dudit tube de repérage (1), et
- ledit piston (40) est connecté audit cylindre (41) par une clavette (42), et, pour permettre le mouvement dudit piston (40) en vue de son dégagement, l'unité de contrôle (18) ouvre un conduit de désactivation (53) menant à une chambre de désactivation (46) de façon à effectuer le mouvement de dégagement du mécanisme.

8. Dispositif selon la revendication 5, caractérisé en ce que

- ledit moteur de mise en prise (19) comprend un solénoïde électromagnétique d'actionnement (71) activé et contrôlé par ladite unité de contrôle (18) commandant l'excitation d'une bobine (75) à partir d'une source de tension électrique (84) par l'intermédiaire de câbles (82) de façon qu'il se produise:

-- un mouvement de mise en prise d'une broche d'actionnement (70) quand ladite bobine est désexcitée, la sollicitation d'un ressort (74) pousse ladite broche d'actionnement (70) dans un mouvement de mise en prise avec ladite pointe d'actionnement (5), ce mouvement de mise en prise est limité par l'extrémité de la course mécanique et par l'action d'un verrou mécanique (76), et

-- un mouvement de dégagement, quand l'unité de contrôle (18) active un relais logique (83) pour exciter la bobine (75) par ladite source de tension électrique (84), la bobine excitée (75) du solénoïde (71) amenant ladite broche d'actionnement (70) à vaincre la force du ressort (74) et du verrou mécanique (76) pour effectuer ainsi le mouvement de dégagement, et

- ledit solénoïde (71) est intégré à la broche d'actionnement (70) qui est découplée, d'une manière permettant la rotation, de ladite pointe d'actionnement (5), dudit arbre creux (2) et dudit tube de repérage (1) par des roulements à rouleaux (73, 78), et ledit solénoïde (71) est fixé au carter d'engrenages (10) par l'intermédiaire d'un tube d'ancrage (80) par une clavette (81) pour avoir un mouvement axial relatif.

9. Dispositif selon la revendication 5, caractérisé en ce que ladite pointe d'actionnement (5), pour effectuer le mouvement d'engagement, pousse lesdites broches d'engagement (4) radialement vers l'extérieur et, pour effectuer le mouvement de dégagement, tire lesdites broches d'engagement (4) radialement vers l'intérieur jusqu'à leur retrait complet dans ledit tube de repérage (1), permettant à celui-ci de coulisser axialement à l'intérieur dudit arbre creux (2) de façon libre et sans gêne.

10. Dispositif selon la revendication 1, caractérisé en ce que l'arbre (34) sur lequel sont montés les engrenages non libres (211-216) des paires à engrènement permanent a une forme polygonale avec des coins arrondis (164) et caractérisé en ce que les engrenages montés sur cet arbre (34) ont un trou central qui a la même forme polygonale avec des coins arrondis (160).

11. Dispositif selon la revendication 1, caractérisé en ce que ledit moteur de synchronisation (16) est entraîné par un servo-actionneur électro-électronique (16a) qui est à son tour contrôlé et commandé par ladite unité de contrôle (18).

12. Dispositif selon la revendication 11 comprenant en outre un moteur d'entraînement à vitesse constante et caractérisé en ce que ledit mécanisme de synchronisation actionne l'arbre de sortie du train d'engrenages par l'intermédiaire d'une première poulie de synchronisation (92) entraînée par ledit moteur de synchronisation (16), transmettant la rotation, par l'intermédiaire d'une courroie ou chaîne de synchronisation (91), à une deuxième poulie dentée ou de synchronisation (90) fixée audit arbre de sortie par l'intermédiaire de moyens à clavette.

13. Dispositif selon la revendication 11 et ayant un moteur d'entraînement à vitesse variable, caractérisé en ce que le mécanisme de synchronisation agit sur l'arbre d'entrée du train d'engrenages par l'intermédiaire d'une première poulie dentée ou de synchronisation (92) fixée au moteur de synchronisation (16), transmettant la rotation, par l'intermédiaire d'une courroie ou chaîne de synchronisation (91), à une deuxième poulie dentée ou de synchronisation (90) fixée à l'arbre d'entrée par l'intermédiaire de moyens à clavette.

14. Dispositif selon la revendication 11 ayant un moteur d'énergie d'alimentation (101) à rotation à vitesse constante, de façon que quand un changement de vitesse est effectué pour passer d'une première paire d'engrenages à engrènement permanent à une deuxième paire, le moteur de synchronisation (16) rend la vitesse de l'arbre de sortie égale à cette vitesse avant le relâchement de l'embrayage et le dégagement des engrenages, multipliée par le rapport de transmission de la première paire d'engrenages à engrènement permanent divisée par le rapport de transmission de la deuxième paire d'engrenages, la supervision de ladite vitesse étant assurée par un capteur de vitesse (94) envoyant les données de vitesse réelle à l'unité de contrôle (18) qui active et contrôle le moteur de synchronisation (16) par l'intermédiaire du servo-actionneur électro-électronique (16a) pour accélérer ou ralentir les parties en rotation afin d'établir la synchronisation.

15. Dispositif selon la revendication 11 ayant un moteur d'énergie d'alimentation (101) à vitesse variable, de façon que quand un changement de vitesse est effectué pour passer d'une première paire d'engrenages à engrènement permanent à une deuxième paire, le moteur de synchronisation (16) rend la vitesse de l'arbre d'entrée égale à la vitesse à laquelle il tournait avant le relâchement de l'embrayage et le dégagement des engrenages, multipliée par la proportion inverse du rapport de transmission de la première paire d'engrenages à engrènement permanent divisée par le rapport de transmission de la deuxième paire d'engrenages, la supervision de ladite vitesse étant assurée par un capteur de vitesse (94) envoyant les données de vitesse réelle à l'unité de contrôle (18) qui active et contrôle le moteur de synchronisation (16) par l'intermédiaire du servo-actionneur électro-électronique (16a) pour accélérer ou ralentir les parties en rotation afin d'établir la synchronisation.

FIG 1

**FIG.1(A)**

**FIG.1B**

**FIG.1(C)**

FIG.2

**FIG.3**

| ELETRIC VOLTAGE SOUCE | RELAY LOGIC | GOVERNING UNIT |

106

TRANSMISSION
BOX

OUTPUT

107

101

102

SHIFT
MECHANISM

105

MOTOR

CLUTCH CASE

103

104

106

**FIG.4**

121

122

104

127

128

SHIFT
MECHANISM

MOTOR

123

126

125

CLUTCH

129

**FIG.5**

FIG.6

FIG.7

26

160

160

**FIG.8**

MACHINES WITH CONSTANT ROTATION MOTOR

FIG.9

MACHINES WITH VARIABLE ROTATION MOTOR

**FIG.10**